# EUROPÄISCHE PATENTANMELDUNG

(11) **EP 0 761 308 A1**
(43) Veröffentlichungstag der Anmeldung: **12.03.1997**
(21) Anmeldenummer: 96114459.9
(22) Anmeldetag: 10.09.1996
(51) Int. Cl.: B01J 37/02, B01J 37/34

(54) **Schalenkatalysatoren für instationär geführte Verfahren**

(30) Priorität: 12.09.1995 DE 19533661
(71) Anmelder: BASF AKTIENGESELLSCHAFT, 67056 Ludwigshafen (DE)
(72) Erfinder: Harth, Klaus, Dr., 67317 Altleiningen (DE); Hagemeyer, Alfred, Dr., 67063 Ludwigshafen (DE); Watzenberger, Otto, Dr., 67059 Ludwigshafen (DE)
(74) Vertreter: Isenbruck, Günter, Dr.

(57) **Zusammenfassung**

Die Schalenkatalysatoren eignen sich für instationär geführte heterogenkatalytische Verfahren, und weisen zwischen dem Träger und gegebenenfalls einer oder mehreren Aktivschichten eine Zwischenschicht aus einem Nitrid, Oxid, Carbid oder Chlorid eines Metalls oder eines Nichtmetalls oder deren Gemischen auf, die eine dichte, porenfreie Mikrostruktur und eine apolare Oberfläche mit einer sehr geringen Dichte von Aziditätszentren aufweist.

## Beschreibung

Die vorliegende Erfindung betrifft Schalenkatalysatoren für instationär geführte heterogenkatalytische Verfahren, die sich aus einem Träger, einer Zwischenschicht und in der Regel mindestens einer Aktivschicht zusammensetzen.

Instationäre Verfahrensführungen sind für eine Reihe von Reaktionen beschrieben, z.B. für die Oxidation von Alkanen zu Aldehyden, Carbonsäuren oder Carbonsäureanhydriden, für die oxidative Dehydrierung von Alkanen bzw. Alkylaromaten oder für die oxidative Kopplung von Methan. Der Katalysator fungiert bei diesen Reaktionen als Sauerstoffspeicher, der bei der eigentlichen Oxidationsreaktion reduziert wird und in einem getrennten Schritt oxidiert wird. Auch für die Herstellung von Cl₂ aus HCl (Deacon-Verfahren) sind instationäre Verfahren bekannt, bei welchen der Katalysator in einem ersten Schritt unter Freigabe von Wasser chloriert wird ("Beladung") und danach in einem zweiten Schritt unter Abgabe von Cl₂ oxidiert wird ("Entladung"). Die einzelnen Reaktionsstufen können zeitlich (z.B. durch Umschalten der Stoffströme in einem Festbettreaktor) oder räumlich getrennt (z.B. durch Ausschleusen des Katalysators in einem zirkulierenden Wirbelschicht- oder Riserreaktor) durchgeführt werden.

Aus der EP-A-283198 ist ein Verfahren zur Herstellung von Chlor durch Reaktion von HCl und Sauerstoff in Gegenwart eines Chromoxidkatalysators bekannt, wobei der Reaktor mit einem Material auf Basis eines Oxids, Nitrids oder Carbids der Elemente B, Al, Si, Ti, Zr oder Cr ausgekleidet ist.

Durch die Auskleidung wird ein korrosiver Angriff des Reaktors und eine Vergiftung des Katalysators durch Wandmaterial verhindert.

Aus der WO-A-85/02557 ist ein inerter Katalysatorträger mit einer durch physikalische Gasphasendeposition aufgebrachten porösen Zwischenschicht aus einem Oxid, Nitrid oder Carbid der Elemente B, Si oder Al bekannt, deren Porosität im Mikrometerbereich liegen soll. Die Zwischenschicht dient zur verbesserten Haftung der Aktivschicht auf dem Träger. Aufgrund der beschriebenen Porosität der Zwischenschicht sind keine Vorteile dieser Katalysatoren für instationäre Reaktionsführungen zu erwarten.

Bekannte, kommerziell verfügbare Katalysatorträger, beispielsweise auf Basis Al₂O₃ oder SiO₂, weisen aufgrund ihrer aziden Oberfläche eine starke Wechselwirkung mit Edukten bzw. Produkten auf. Auch bei mikroporenfreien Trägern kann daher verstärkt eine unerwünschte Adsorption der entsprechenden Moleküle an der Oberfläche des Trägers stattfinden. So zeigen die genannten Trägermaterialien beispielsweise beim instationären Deacon-Prozeß eine hohe HCl-Aufnahme, welche unwirtschaftlich lange Spülphasen zwischen den einzelnen Zyklen erforderlich macht. Eine Verkürzung dieser Spülzeiten führt zu einem unreineren Produktstrom und bedingt eine aufwendigere Aufarbeitung. Neben der Aufnahme der Edukte an dem Katalysator-Träger kann auch die Aufnahme auf der Innenwand des Reaktors oder der Reaktorzuleitungen zu unerwünschten Verunreinigungen des Produktstroms führen.

Der vorliegenden Erfindung lag daher die Aufgabe zugrunde, einen für instationäre Fahrweisen geeigneten Trägerkatalysator zu entwickeln, und den zuvor genannten Nachteilen abzuhelfen, insbesondere mit geringer Aufnahmefähigkeit für die Edukte bzw. Produkte.

Die vorliegende Erfindung betrifft Schalenkatalysatoren für instationär geführte heterogenkatalytische Verfahren aus einem Katalysatorträger, einer Zwischenschicht und gegebenenfalls mindestens einer Aktivschicht, welche dadurch gekennzeichnet sind, daß sich zwischen dem Träger und gegebenenfalls einer oder mehreren Aktivschichten eine Zwischenschicht aus einem Nitrid, Oxid, Carbid oder Chlorid eines Metalls oder eines Nichtmetalls oder deren Gemischen befindet, die eine dichte, porenfreie Mikrostruktur und eine apolare Oberfläche mit einer sehr geringen Dichte von Aziditätszentren aufweist.

Die erfindungsgemäßen Schalenkatalysatoren haben einen Kern (Träger) und eine Schutz- oder Zwischenschicht, bevorzugt eine Zwischenschicht, die eine hohe Diffusionssperrwirkung und eine niedrige Adsorption für die Edukte bzw. Produkte aufweist. Die erfindungsgemäße Zwischenschicht besteht aus mindestens einem Nitrid, Oxid, Carbid oder Chlorid eines Metalls wie Al, Ti, V, Cr, Mn, Fe, Co, Ni, Cu, Zn, Y, Zr, Nb, Mo, Ru, Rn, Pd, Ag, Cd, In, Sn, Sb, Tc, Hf, Ta, W, Re, Os, Ir, Pt, Au, Pb, Bi, bevorzugt Al, Ti, Cr, Zr, Ag, Ta oder eines Nichtmetalls wie Bor, Silicium, Germanium, bevorzugt Silicium.

Die engere Auswahl der Zwischenschicht wird durch die Randbedingungen des jeweiligen instationär geführten Verfahrens bestimmt. Als Verfahren, die instationär gefahren werden können, seien der Deacon-Prozess und Oxidationsreaktionen beispielhaft genannt. Die instationär geführten Verfahren können bei Temperaturen von 50 bis 600°C, bevorzugt 100 bis 550°C, besonders bevorzugt 150 bis 520°C und einem Druck von 0,1 bis 100 bar, bevorzugt 0,5 bis 80 bar, besonders bevorzugt 1 bis 70 bar durchgeführt werden.

Beim instationären Deacon-Verfahren eignen sich Zwischenschichten aus Nitriden, hochcalzinierten Oxiden (z.B. SiO₂), Silberchlorid oder deren Gemischen, bevorzugt Si₃N₄, Silberchlorid oder deren Gemischen, besonders bevorzugt Si₃N₄.

Die Dicke der Zwischenschicht liegt in der Regel zwischen 1 und 10 000 nm, bevorzugt zwischen 5 und 100 nm. Die Mindestdicke orientiert sich daran, daß der Träger möglichst flächendeckend und porenfrei durch die Zwischenschicht überdeckt sein sollte.

Die Herstellung der erfindungsgemäßen Zwischenschichten kann durch PVD (Physical Vapor Deposition) oder CVD (Chemical Vapor Deposition) erfolgen. Mögliche PVD-Verfahren sind das Aufdampfen, die Kathodenzerstäubung oder die Lichtbogenbeschichtung (vgl. R. F. Bhunshah et al, "Deposition technologies for Films and Coatings", Noyes Publications, 1982). Ein mögliches CVD-Verfahren ist die plasmaunterstützte Gasphasenabscheidung (vgl. H. Yasuda, "Plasma Polymerization", Academic Press, 1985). Die Zwischenschicht kann bevorzugt durch plasmaunterstützte Herstellungsverfahren abgeschieden werden, da diese in der Regel zu dichten, porenfreien Schichten mit einer hohen Diffusionssperrwirkung führen.

Die Depositionsverfahren können in an sich bekannter Weise reaktiv oder nicht-reaktiv durchgeführt werden. Bei reaktiver Herstellung wird das Metall oder Nichtmetall in Verbindung mit einem Reaktivgas (z. B. O₂, N₂, Kohlenwasserstoffe, Cl₂) abgeschieden, wobei direkt die entsprechenden Oxide, Nitride, Carbide oder Chloride erhalten werden. Bei nicht-reaktiver Deposition wird das Metall oder Nichtmetall in einem ersten Schritt als dünne Schicht abgeschieden und in einem getrennten anschließenden Schritt oxidiert, nitriert, carburiert oder chloriert.

Als Träger der erfindungsgemäßen Katalysatoren eignen sich beispielsweise Formkörper oder monolithische Packungen aus Keramiken, Metallen oder Kunststoffen. Mögliche Materialien sind z.B. Glas, Quarzglas, Aluminiumoxid, Siliciumnitrid, Titandioxid, Aluminosilikate, Magnesiumsilikate, Metalle oder Kohlenstoff. Als Formkörper kommen u.a. Tabletten, Stränge, Extrudate oder Splitt in Frage, wobei der Träger eine kugelförmige, zylinderförmige, ringförmige, sternförmige, wagenradförmige oder eine sonstige geeignete Geometrie besitzen kann. Als Packungen kommen die an sich bekannten Reaktorpackungen mit statischen Mischeigenschaften (Chemical Engineering, Juni 1994, Seite 76 bis 82) in Betracht. Es können sowohl porenfreie als auch porenhaltige Träger eingesetzt werden. Bevorzugt werden porenfreie Träger oder mikroporenfreie Träger mit einer einstellbaren Porengröße im Meso- und Makroporenbreich verwendet. Als Träger kommen insbesondere auch preisgünstige Standard-Katalysatorträger in Betracht, deren Adsorptionsverhalten ohne Beschichtung aus den oben genannten Gründen für ein instationäres Herstellungsverfahren nicht geeignet wäre, wie Träger auf Basis Al₂O₃ oder SiO₂, bevorzugt Träger aus Glas.

Das Aufbringen der katalytisch aktiven Schicht auf den mit der Zwischenschicht versehenen Träger kann in der Regel mit den bekannten naßchemischen oder pulvermetallurgischen Beschichtungsverfahren wie Tränkung, Sprüh-Imprägnierung, High-Coating, Flamm-/Plasmaspritzen oder einem PVD- oder CVD-Verfahren erfolgen.

Beim Einsatz der erfindungsgemäßen Schalenkatalysatoren in instationär geführten Verfahren ist es vorteilhaft, auch die Wandungen und die Zuführungen des Reaktors mit einer diffusionssperrenden, adsorptionsarmen Schicht (Zwischenschichtmaterial) zu belegen. Für die Beschichtung dieser Reaktorteile gelten die gleichen Randbedingungen wie für die Trägerbeschichtung.

### Beispiele

### Katalysatorträger A

### Herstellung eines Trägers mit Si₃N₄-Zwischenschicht

Porenfreie, oberflächlich angerauhte Glaskugeln mit einem Durchmesser von 3 mm wurden auf ein rundes Stahlnetz (Durchmesser 100 mm, Maschenweite 0,4 mm) aufgelegt und in eine Kathodenzerstäubungsanlage eingebracht. In einem Abstand von 56 mm wurde ein polykristallines Si-Target (Durchmesser 150 mm) eingesetzt. Bei einem Druck von 10⁻⁶ mbar wurde Argon bis zu einem Druck von 5 · 10⁻³ mbar eingelassen, an das periodisch vibrierende Stahlnetz eine RF(Radiofrequenz)-Spannung mit einer Leistung von 250 W angelegt und der Träger 5 min einer Sputterätzbehandlung unterzogen. Anschließend wurde Stickstoff mit einem Druck von 3 · 10⁻³ mbar eingelassen, der Argon-Partialdruck auf 2 · 10⁻³ mbar eingestellt, ein RF-Plasma mit einer Leistung von 1000 W angelegt und das Si-Target im RF-Magnetron-Modus oberflächlich zerstäubt. Man erhielt eine Si₃N₄-Schicht mit einer Dicke von 30 nm auf den Glaskugeln.

### Katalysatorträger B

### Herstellung eines Trägers mit AgCl-Zwischenschicht

Aufgerauhte Glaskugeln wurden wie vorstehend beschrieben in einer Kathodenzerstäubungsanlage vorbehandelt. Durch DC(Gleichstrom)-Magnetron-Sputtern eines Ag-Targets (Durchmesser 200 mm) mit einer Leistung von 500 W bei einem Argon-Druck von 5 ·10⁻² mbar wurde eine 100 nm dicke Ag-Schicht auf dem Träger abgeschieden. Danach wurden die beschichteten Kugeln bei einer Temperatur von 400°C/8 min. einer HCl-haltigen Atmosphäre ausgesetzt.

### Adsorptionsverhalten gegenüber HCl

Die erfindungsgemäßen Katalysator-Träger A und B sowie zum Vergleich die nicht-erfindungsgemäßen Referenzträger Pural) SCF der Condea (Al₂O₃) und SiO₂ wurden jeweils in einem Röhrenreaktor mit einer 20ml Katalysator-Festbettschüttung hinsichtlich ihres HCl-Adsorptionsverhaltens charakterisiert. Dabei wurde der Träger zunächst in einem trockenen HCl-Strom [25 Vol.-% in N₂, 400°C, Belastung (z.B. l Edukt pro h pro l Katalysator) 1000 h⁻¹] beladen. Danach wurde das adsorbierte HCl mit einem Spülgas (N₂, 60 l/h) ausgetragen. Der HCl-Gehalt im Spülgas wurde zeitabhängig IR-spektrometrisch bestimmt. Die Ergebnisse sind in der nachstehenden Tabelle zusammengefaßt.

**Tabelle**

| Spülzeit [min] | Katalysator A | Katalysator B | Leerrohr | Pural) SCF | SiO₂ |
|---|---|---|---|---|---|
| 2,3 | 0,972 | 1,47 | 1,29 | 1,92 | 1,52 |
| 4,7 | 0,026 | 0,035 | 0,032 | 0,21 | 0,082 |
| 7 | 0,0149 | 0,0195 | 0,0171 | 0,179 | 0,037 |
| 9,3 | 0,0105 | 0,0125 | 0,012 | 0,132 | 0,026 |
| 11,7 | 0,0087 | 0,0088 | 0,0091 | 0,103 | 0,0197 |
| 14 | 0,0074 | 0,0069 | 0,0073 | 0,0823 | 0,0144 |
| 16,3 | 0,0063 | 0,0054 | 0,0061 | 0,073 | 0,0122 |
| 18,7 | 0,0058 | 0,0044 | 0,0058 | 0,0642 | 0,0106 |
| 21 | 0,0049 | | 0,0049 | 0,0577 | 0,0091 |
| 23,3 | 0,0043 | | 0,0040 | 0,0533 | 0,0082 |
| 25,7 | 0,0038 | | | | 0,0076 |
| 28 | | | | 0,0318 | 0,0074 |
| 30,3 | | | | 0,0338 | 0,0066 |
| 32,7 | | | | 0,033 | 0,0055 |
| 35 | | | | 0,0315 | 0,0053 |
| 37,3 | | | | | 0,0049 |
| 39,7 | | | | | 0,0048 |
| 42 | | | | | 0,0055 |
| 49 | | | | 0,024 | 0,0049 |
| 56 | | | | | 0,0045 |

Die erfindungsgemäßen Träger zeigten eine deutlich niedrigere HCl-Adsorption als die Vergleiche und erreichen die Ergebnisse des Leerrohrs. Aufgrund der wesentlich verkürzten Spülphase sind mit den erfindungsgemäßen Katalysatorträgern deutlich höhere Raum-Zeit-Ausbeuten als mit den Vergleichsträgern erzielbar.

## Patentansprüche

1. Schalenkatalysatoren für instationär geführte heterogenkatalytische Verfahren aus einem Katalysatorträger, einer Zwischenschicht und gegebenenfalls mindestens einer Aktivschicht, dadurch gekennzeichnet, daß sich zwischen dem Träger und gegebenenfalls einer oder mehreren Aktivschichten eine Zwischenschicht aus einem Nitrid, Oxid, Carbid oder Chlorid eines Metalls oder eines Nichtmetalls oder deren Gemischen befindet, die eine dichte, porenfreie Mikrostruktur und eine apolare Oberfläche mit einer sehr geringen Dichte von Aziditätszentren aufweist.

2. Schalenkatalysatoren nach Anspruch 1, dadurch gekennzeichnet, daß er eine oder mehrere Aktivschichten aufweist.

3. Schalenkatalysatoren nach Anspruch 1 oder 2, dadurch gekennzeichnet, daß die Zwischenschicht aus einem Nitrid, einem hochcalcinierten Oxid oder Silberchlorid oder deren Gemischen, insbesondere aus Siliciumnitrid, besteht.

4. Schalenkatalysatoren nach einem der Ansprüche 1 bis 3, dadurch gekennzeichnet, daß die Schichtdicke der Zwischenschicht 1 bis 10 000 nm beträgt.

5. Schalenkatalysatoren nach einem der Ansprüche 1 bis 4, dadurch gekennzeichnet, daß man die Zwischenschicht durch physikalische oder chemische Gasphasendeposition auf den Träger aufbringt.

6. Verwendung der Schalenkatalysatoren nach einem der Ansprüche 1 bis 5 zur Durchführung instationär geführter heterogenkatalytischer Verfahren.

7. Instationär geführtes heterogenkatalytisches Verfahren bei Temperaturen von 50 bis 600°C und einem Druck von 0,1 bis 100 bar in Gegenwart eines Schalenkatalysators, dadurch gekennzeichnet, daß man einen Schalenkatalysator nach einem der Ansprüche 1 bis 5 einsetzt.

8. Verfahren nach Anspruch 7, dadurch gekennzeichnet, daß man die Innenwandungen von Reaktor und Reaktorleitungen mit einer Schicht aus einem Nitrid, Oxid, Carbid oder Chlorid eines Metalls oder eines Nichtmetalls oder deren Gemischen auskleidet, die eine dichte, porenfreie Mikrostruktur und eine apolare Oberfläche mit einer sehr geringen Dichte von Aziditätszentren aufweist.

9. Verfahren nach Anspruch 7 oder 8, dadurch gekennzeichnet, daß man Chlorwasserstoff zu Chlor umsetzt.

10. Verfahren nach Anspruch 7 oder 8, dadurch gekennzeichnet, daß man Oxidationsreaktionen durchführt.
